# EUROPEAN PATENT SPECIFICATION

(11) **EP 1 931 012 B1**
(45) Date of publication and mention of the grant of the patent: **04.11.2009**
(21) Application number: 06460043.0
(22) Date of filing: 07.12.2006
(51) Int. Cl.: H02J 13/00

(54) **Method and device for monitoring digital signals generated in power electric meters working in substation automation system**
Verfahren und Vorrichtung zur Überwachung von digitalen, von in einer Verteilerautomatisierungseinrichtung arbeitenden elektrischen Messgeräten hoher Leistung erzeugten Signalen
Procédé et dispositif de surveillance de signaux numériques fournis par des appareils de mesures électriques de puissance dans un système d'automatisation d'un sous-station

(43) Date of publication of application: 11.06.2008
(73) Proprietor: ABB Research Ltd., 8050 Zürich (CH)
(72) Inventor: Kuc-Dzierzawska, Aleksandra, 31-436 Kraków (PL); Korendo, Zbigniew, 31-216 Kraków (PL); Schibli, Andreas, 9545 Waengi (CH)
(74) Representative: Chochorowska-Winiarska, Krystyna

(56) References cited:
- WO-A1-02/054562
- DE-A1- 3 506 469
- JP-A- 9 222 445
- US-A- 5 764 155
- APOSTOLOV A ET AL: "Functional testing of IEC 61850 based IEDs and systems" POWER SYSTEMS CONFERENCE AND EXPOSITION, 2004. IEEE PES NEW YORK CITY, NY, USA 10-13 OCT. 2004, PISCATAWAY, NJ, USA,IEEE, 10 October 2004 (2004-10-10), pages 1683-1688, XP010788023 ISBN: 0-7803-8718-X

## Description

The subject of the invention is a method, a device and a computer program for monitoring digital signals generated in electric power meters working in substation automation systems, which meters are a source of a digital signal containing current and voltage values measured in primary circuits.

In substation automation systems, for the purpose of testing electric power meters in the form of current and/or voltage transformers, it is required to make a preliminary comparison between a signal transmitted by the tested transformer and the expected values resulting from the applied testing procedure, e.g. the predetermined characteristic of a signal measured in laboratory conditions by the tested current and/or voltage transformer. With the development of the standard for communication in substation automation systems IEC 61850, the so called process communications bus which connects the primary circuits including transformers measuring current and/or voltage in the system of an electrical substation with secondary circuits, i.e. protective relays, is growing in importance. A replacement of the traditional cabled connections between current and/or voltage transformers and protective relays with Ethernet communication results in supplanting traditional methods of signal monitoring using an oscilloscope connected to the transformers by means of an analogue input and watching the registered signal on the display of that oscilloscope.

A. Apostolov et al., "Functional Testing of IEC 61850 Based IEDs and Systems", Power Systems Conference and Exposition 2004, pages 1683-1688, ISBN: 0-7803-8718-X, discloses the monitoring of IEDs.

The state of the art knows digital oscilloscopes which are adapted to changing an analogue measuring signal into a digital signal and which, in this form, enable observation of measurement results. An example of such an oscilloscope is the device presented in patent application W02005/119273. These devices, however, have analogue inputs which allow to connect only a traditional analogue signal, and it is only their internal design that allows to convert the analogue signal into a digital one. These devices are not capable of having a digital signal sent to them through a network, such as Ethernet, from a remote measuring instrument.

An American patent application No. US2005144205 also reveals a device which transforms digital signals and displays them on a display which can be a computer display and not an oscilloscope display, however, also the presented device requires the signals to be connected in an analogue form or at least that each signal be connected to a different digital input channel.

Patent EP0710377B1 describes a device for displaying a digital sampled signal which can be the characteristic of a television signal, representing each signal sample as an individual pixel on the display and calculating the position of that pixel on the basis of a predefined displaying standard. This device, however, does not permit a change, during its operation, of the device that sends the digital signal which is visualised and it does not monitor in real time the quantity and the communication addresses of active devices sending the signal. Furthermore, this device does not check the correctness of data transmitted as a digital, sampled signal in the form of Ethernet data packages and it does not generate statistics for the device that sends the visualised signal, either.

The mentioned disadvantages are overcome by the method, the device, and the computer program as defined in claims 1, 6, and 12, respectively.

**The method for monitoring digital signals generated in electric power meters functioning in station automatic systems,** in which a computer device and a process communications bus are used for transmitting digital signals, includes the following actions:
- in a communications port, sampled digital signals sent by at least one electric power meter in the form of network packages are received, and then they are sent to a network package analysis module and farther through a signal decoder module to a visualisation table register module, data from the network packages being transformed, in the signal decoder module, into the values of currents and voltages transmitted with a digital signal and divided into process data, data useful for creating statistics and data useful for generating a list of active electric power meters, which are stored in the visualisation table register module,
- in the network package analysis module there is captured a signal visualisation retention mark which is supplied from the signal analysis module and the identification data of the electric power meter that has been selected in the control module,
- data captured by the network package analysis module are transmitted to an electric power meter detection module in which the quantity and the identification data of active electric power meters are defined in real time and then they are sent to the visualisation table register module,
- in the signal analysis module, on the basis of data useful for creating statistics, the statistics of the electric power meters concerning the quality of the signal sent by the given electric power meter is calculated,
- data from the module, the signal analysis module and the control module are sent to a display control module in which the display content is formed automatically.

Preferably, the capture of a sampled digital signal by the network package analysis module consists in picking up network data packages in a way invisible for any of the electric power meters, without establishing connection that involves the use of the protocol through which the tested sampled digital signal is transmitted.

Preferably, the signal visualisation retention mark is calculated in the signal analysis module in real time on the basis of the retention criterion and process data and it is given a logical value denoting the retention of the so called signal snapshot on the display or denoting continuation of the visualisation.

Preferably, only signals compatible with IEC61850-9-2 protocol are captured in the network package analysis module.

Preferably, process data only for the electric power meter selected earlier in the control module are sent to the visualisation table register.

**The device** contains:
- a communications port which is connected with a network package analysis module, used for sampling a digital signal in the form of network packages,
- a network package analysis module containing a filter block and a buffer, used for storing filtered network packages belonging to the sampled digital signal and for checking the value of the signal retention mark,
- an electric power meter detection module used for determining the quantity of active electric power meters in real time and for reading the identification data of these meters, whose input is connected with the network package analysis module,
- a signal decoder module used for converting data from packages transmitted via the process communications bus into current and voltage values transmitted with a digital signal and for dividing these data into process data, data useful for creating statistics and data useful for generating a list of active electric power meters,
- a visualisation table register module, used for storing data samples in the form of visualisation tables, whose input is connected with the signal decoder module and with electric power meter detection module,
- a signal analyser module, whose inputs are connected with the visualisation table register module and the control module, used for calculating the signal visualisation retention mark and for calculating the signal statistics relating to the quality of this signal for each of the electric power meters,
- a control module, used for entering the signal visualisation retention criterion and selecting a meter for visualisation, which is connected with the visualisation table register module, the signal analysis module and the network package analysis module,
- a display control module, used for automatically forming the content of the display, which is connected with the visualisation table register module, the signal analyser module, the control module and the display.

Preferably, the network package analysis module is connected to the process communications bus through a communications port and it captures network packages without establishing connection with the electric power meter that involves the use of the protocol through which the tested sampled digital signal is transmitted.

Preferably, the network package analysis module is able to capture only network packages belonging to IEC61850 9-2 protocol.

Preferably, the signal analysis module contains a statistics register block in which the statistics of signal quality are calculated for each of the tested electric power meters.

Preferably, the electric power meter is a current and/or voltage transformer.

Preferably, the electric power meter is any device compatible with the protocol with which the tested sampled digital signal is transmitted.

Preferably, the electric power meter is a current and/or voltage transformer or any device compatible with the protocol through which the tested sampled digital signal is transmitted.

**An advantage of the inventive method and device** is that they make it possible to monitor a digital signal coming from an electric power meter working in a substation automation system and to visualise the digital signal on a display in real time. In addition, the invention enables automatic detection of active meters, i.e. meters which send a digital signal, as well as conducting signal analysis for a selected meter from an angle of data statistics. The invention allows to introduce the criterion of signal visualisation retention and to visualise a signal compatible with the standard IEC 61850-9-2.

**The inventive method and device has been explained on the basis of an embodiment** presented in the drawing, where:

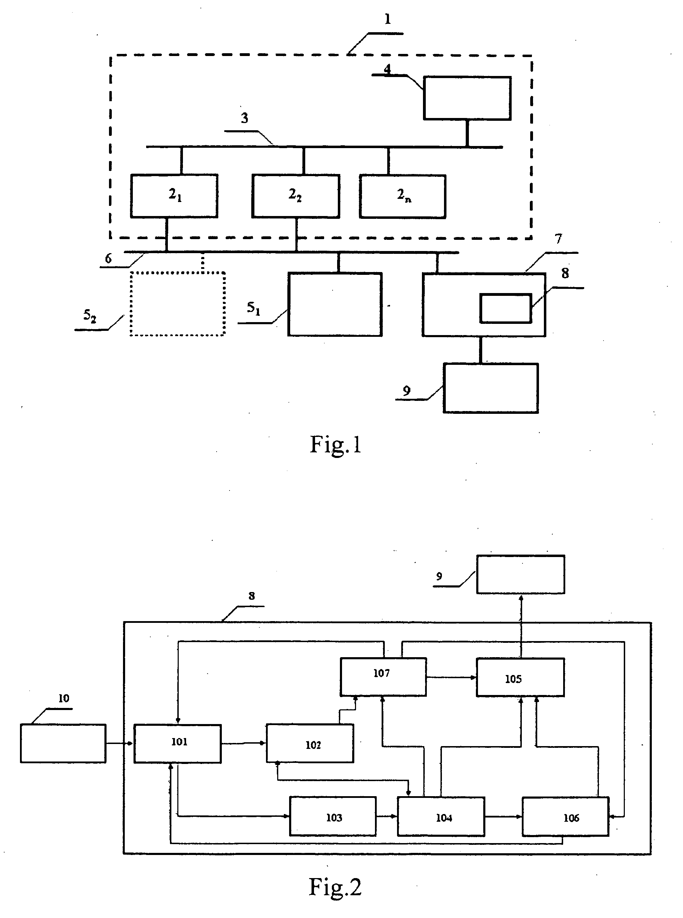

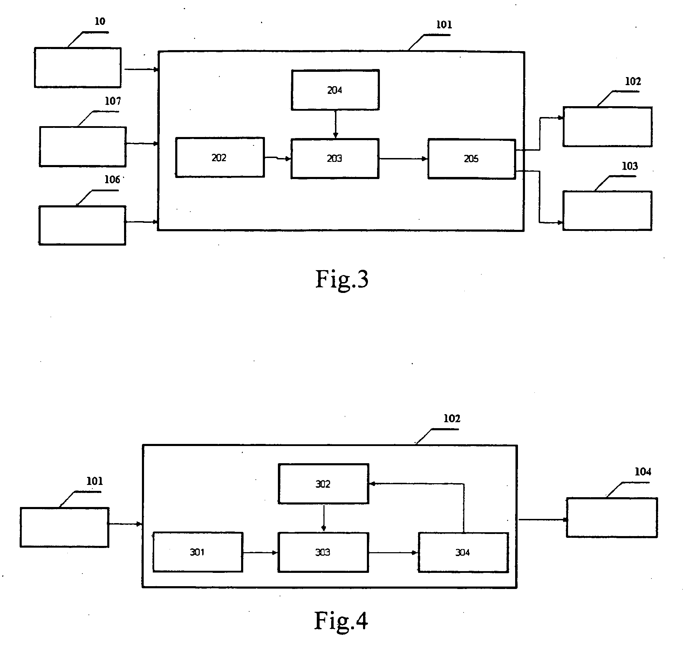

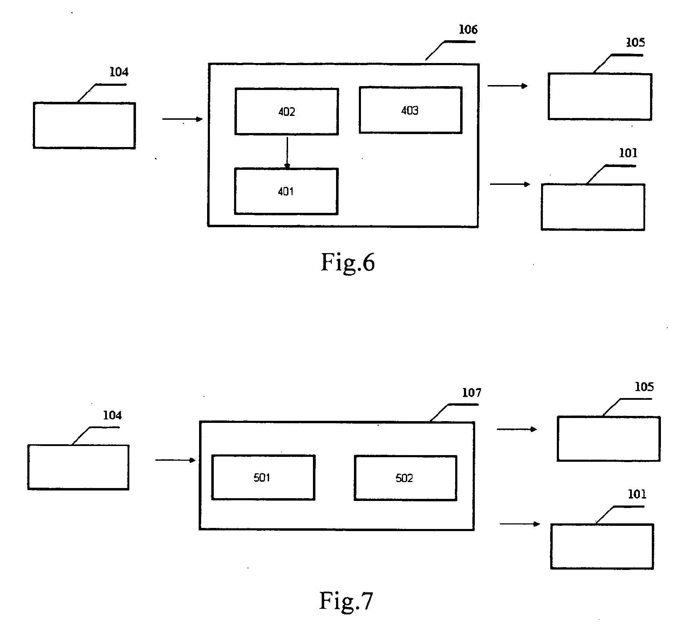

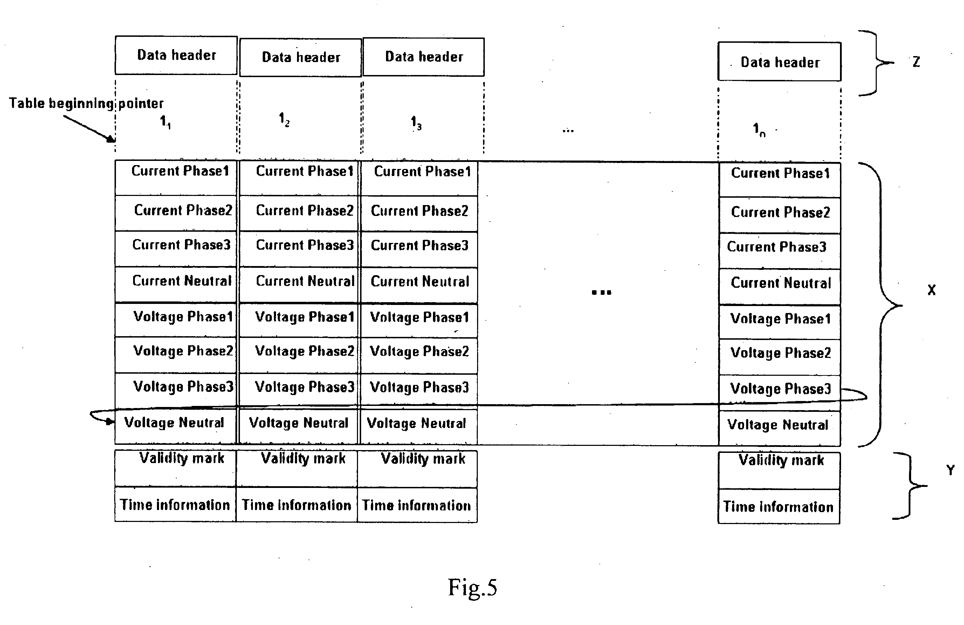

fig. 1 shows the application environment of the inventive device, fig. 2 - a block diagram of the inventive device,_ fig. 3 - a block diagram of the network package analysis module, fig. 4 - a block diagram of the signal decoder, fig. 5 - an example of the visualisation table used in the inventive device, fig. 6 - a block diagram of the signal analyser module, and fig. 7- a block diagram of the control module.

The inventive device converts in real time a digital signal coming from current and/or voltage transformers, and particularly a digital signal compatible with IEC 61850 standard transmitted by the IEC 61850 9-2 protocol, into a graphic representation. A typical environment in which the inventive device can be applicable is shown in fig. 1.
The substation automation system 1 contains a certain number of protective relays 2₁, 2₂.....2ₙ, interconnected by means of a station communications bus 3, preferably compatible with the IEC 61850 standard. A monitoring device 4 is connected to the station communications bus 3. The protective relays 2₁, 2₂.....2ₙ are connected with electric power meters 5 by means of a process communications bus 6 through which the digital signal representing measured current and/or voltage values in the form of network packages is transmitted. The electric power meters 5 are current and/or voltage transformers compatible with the IEC 61850 9-2 protocol, capable of for sending the measured current and/or voltage values in the form of a digital sampled IEC 61850-9-2 signal from primary circuits via the process communication bus 6, whereas the transmitted digital signal has a format compatible with that protocol. A computer 7 with data processing unit, containing the inventive device 8 connected with a display 9, is connected to the process communications bus 6.

The inventive device is shown in fig. 2. A communications port 10 is connected with a network package analysis module 101 whose one output is connected with an electric power meter detection module 102, and the second output is connected with a signal decoder module 103. One of the inputs of the network package analysis module 101 is connected with the output of a signal analysis module 106, and the second with the input of a control module 107. Then, the signal decoder 103 is connected with a visualisation table register module 104 whose input is connected with the output of the electric power meter detection module 102 which sends a digital sampled signal compatible with the IEC 61850 standard. The output of the electric power meter detection module 102 is connected with the visualisation table register module 104. One of the outputs of the visualisation table register module 104 is directly connected with a display control module 105, the second output of the visualisation table register module is connected with the signal analysis module 106 which is also connected with the display control module 105 and the network package analysis module 101, while the third output is connected with the control module 107. The outputs of the control module 107 are connected with the network package analysis module 101, the signal analysis module 106 and the display control module 105 which is connected with a display 9.

The data input module 10 is a communications port connecting the network package analysis module 101 with the process communication bus 6 and it has the form of a network adapter, e.g. an Ethernet card.

In the network package analysis module 101 shown in fig. 3, samples of the digital signal according to the IEC 61850-9-2 protocol are taken which are transmitted in the network by the process communications bus 6 and the signal visualisation retention mark calculated in the signal analysis module 106 is taken. If the retention criterion from the signal analyser module 106 has been calculated and has received the value TRUE, the signal visualisation retention mark also has the value TRUE, and then sampling of the digital signal is stopped. The earlier samples of the digital signal in the form of network packages are captured in a network package capture block 202 in a way invisible to the intercommunicating devices, i.e. the electric power meter 5 and protective relays 2₁...... 2ₙ, which means that the electric power meter 5 has no information about the connected inventive device 8, which device does not establish connection that involves the use of the IEC 61850 9-2 protocol with the meter 5. The captured network packages are filtered in a filter 203 of the IEC 61850-9-2 protocol to remove packages which do not originate from this protocol, a clock 204 being used during filtration, by means of which clock information about time is supplied which information is added to the network packages. Then, filtered network packages are stored in a package buffer 205.

On the basis of data downloaded from the buffer 205, the electric power meter detection module 102 defines how many active electric power meters 5, i.e. current and/or voltage transformers sending a sampled digital signal via the IEC 61850-9-2 protocol, are in the local network and it reads the communication addresses of all these devices. The data from the buffer 205 are taken by the electric power meter detection module 102 in a way which does not remove them from this buffer, thanks to which they are available also for other elements of the equipment. The read-out communication addresses and the numbers of the active current and/or voltage transformers are recorded in the visualisation table register module 104.

Data from the network package analysis module 101 are supplied to the register 104 through the signal decoder 103 in which data from network packages are changed into the values of measured currents and voltages. In the signal decoder module 103, by means of a data section selector block 301, data selection is made on the basis of information about the time of reception of the data by the communications port 10, and on the basis of a description of the IEC 61850 9-2 data structure placed in the block 302 of the description of that structure, in the data decoder block 303 there are generated two types of data concerning values useful for creating the statistics of the given current and/or voltage transformer and current data from the module 101 recorded in the visualisation tables which are placed in the module 104.

The visualisation table register module 104 is used for taking readings and storing data samples from packages, separately for each meter, in a visualisation table made specially for this purpose, which table contains an indicator of the beginning of the table marked, for example, as a consecutive number from 1₁ to 1ₙ and consecutive samples of current and voltage samples:

### Generally, in the visualisation table, data are divided into the following segments.

X - containing the read-off values of currents and voltages transmitted with the sampled digital signal, so called process data,
Y - containing information useful for generating the statistics of the given current and/or voltage transformer, so called data useful for creating the signal statistics,
Z - containing information useful for generating a list of active current and/or voltage transformers, so called data useful for creating a list of active meters 5.

Part Z of the sample is information about the number of visualisation tables stored in the visualisation table register module 104.

The register 104 is connected with the control module 107 which is used for selecting the electric power meter sending the signal to be visualised.

Data from the register 104 are transmitted to the signal analysis module 106 and to the control module 107 as well as to the display control module 105.

In the signal analysis module 106, shown in fig. 6, the signal visualisation retention mark is calculated and signal statistics is calculated for each of the meters 5. The retention criterion is verified in a signal visualisation retention mark calculation block 401 and stored in a retention criterion register block 402. Data about transformer statistics are registered in a statistics register 403. Data from the signal analysis module 106 are sent to the display control module 105 and to module 101. To module 105 are also supplied the data of the visualisation table register module 104 and data from the control module 107.

The control module 107, demonstrated in fig. 7, is used for introducing the retention criterion and for selecting the meter that sends the signal for visualisation. In this module a list of active electric power meters is taken from the visualisation table register module 104, which list is used for selecting the meter in block 501 of the selector of the meter sending a signal for visualisation. The selection of this meter is made by marking one of the elements from the list of active measuring devices, read-off and permanently updated from module 104, which is not shown in the drawing.

The control module 107 contains also a retention criterion selector block 502 in which signal visualisation retention criterion calculated in the signal analysis module 106 is introduced. The way of introducing the retention criterion is not shown in the drawing. An example of a retention criterion can be a retention of a signal visualisation 10 milliseconds after the value of the voltage of phase 1 exceeds, for example, 200 kV.

The control module 107 is connected with the display control module 105 which in turn is connected with the display 9 by means of which the graphic representation of the examined signal is displayed. In the display control module 105 the content of the display 9 is formed automatically and in real time by calculating the position of the displayed pixels on the basis of data obtained from the sampled signals. In this module the display 9 is automatically scared to hold all sample values taken in the set time on its screen.

### List of designations

1 - substation automation system
2₁, 2₂, .., 2ₙ - protective relays -
3 - station communication bus
4 - monitoring device
5 - electric power meter
6 - process communications bus
7 - computer with data processing unit
8 - the inventive device
9 - display
10 - communications port
101 - the network package analysis module
102 - electric power meter detection module
103 - signal decoder module
104 - visualisation table register module
105 - display control module
106 - signal analysis module
107 - control module
202 - network package capture block
203 - IEC 61850-9-2 protocol filter block
204 - clock block
205 - package buffer
301 - data section selector block
302 - IEC 61850-9-2 data structure description block
303 - data decoder block
401 -signal visualisation retention mark calculation block
402 - retention criterion register block
403 - statistics register block
501 - block of the selector of the meter sending signal for visualisation
502 - retention criterion selector block

## Claims

1. A method for monitoring digital signals generated in power electric meters working in substation automation systems, making use of a computer device and a process communications bus for transmitting digital signals, including the following actions:
- sampled digital signals sent by at least one electric power meter (5) in the form of network packages are received in a communications port (10) and then they are sent to a network package analysis module (101) and then through a signal decoder module (103) to a visualisation table register module (104), the data from the network packages being transformed in the signal decoder module (103) into the values of currents and voltages transmitted by a digital signal and divided into process data (X), data useful for producing statistics (Y) and data (Z) useful for generating a list of active electric power meters (5), which are stored in the visualisation table register module (104),
- a signal visualisation retention mark which is supplied from a signal analysis module (106) and identification data of the electric power meter (5) previously selected in a control module (107) are captured in the network package analysis module (101),
- the data captured by the network package analysis module (101) are transmitted to an electric power meter detection module (102) in which the quantity and the identification data of active electric power meters (5) are determined in real time and then they are transmitted to the visualisation table register module (104),
- in the signal analysis module (106), on the basis of data useful for creating statistics (Y), the statistics of the electric power meters (5) concerning the quality of the signal sent by the given electric power meter (5) is calculated,
- the data from the visualisation table register module (104), the signal analysis module (106), the control module (107) are sent to a display control module (105) in which the content of a display (9) is automatically formed.

2. A method according to claim 1, **characterised in that** the capture of the sampled digital signal by the network package analysis module (101) consists in the reception of network data packages in a way invisible for any of the meters (5), without establishing connection that involves the use of the protocol through which the tested sampled digital signal is transmitted.

3. A method according to claim 1, **characterised in that** the signal visualisation retention mark is calculated in the signal analysis module (106) in real time on the basis of the retention criterion and process data (X), and a logical value denoting the retention of a so called signal snapshot on the display (9) or denoting the continuation of the visualisation is assigned to it.

4. A method according to claim 1, **characterised in that** only process data (X) referring to the electric power meter (5) previously selected in the control module (107) are transmitted to the visualisation table register (104).

5. A method according to claims 1-4, **characterised in that** the electric power meter (5) is a current and/or voltage transformer or any device compatible with the protocol with which the examined sampled digital signal is transmitted.

6. A device for implementing the method according to claims 1-4, comprising:
- the communications port (10) which is connected with the network package analysis module (101), used for taking samples of the digital signal in the form of network packages,
- the network package analysis module (101) containing a filter block (203) and a buffer (205), used for storing filtered network packages belonging to the digital sampled signal and for checking the value of the signal visualisation retention mark,
- the electric power meter detection module (102) used for defining the number of electric power meters (5) in real time and for reading identification data of these meters, whose input is connected with the network package analysis module (101),
- the signal decoder module (103) used for converting the data from the packages transmitted via a process communications bus (6) into the values of currents and voltages transmitted by a digital signal and for separating these data into process data (X), data useful for creating statistics (Y) and data (Z) useful for generating a list of active electric power meters (5),
- the visualisation table register module (104) used for storing data samples in the form of visualisation tables, whose input is connected with the signal decoder module (103) and with the electric power meter detection module (102),
- the signal analysis module (106), whose inputs are connected with the visualisation table register module (104) and the control module (107), used for calculating the mark of the signal visualisation capture and for calculating signal statistics concerning the quality of this signal for each of the electric power meters (5),
- the control module (107) used for introducing the signal visualisation retention criterion and selecting the meter for visualisation, which is connected with the visualisation table register module (104), the signal analysis module (106) and the network package analysis module (101),
- the display control module (105) used for automatically forming the content of the display, which is connected with the visualisation table register module (104), with the signal analysis module (106), with the control module (107) and with the display (9).

7. A device according to claim 6, **characterised in that** the network package analysis module (101) is connected to the process communications bus (6) through the communications port (10) and it captures network packages without establishing connection with the electric power meter (5) that involves the use of the protocol, through which the examined sampled digital signal is transmitted.

8. A device according to claims 6 or 7, **characterised in that** the signal analysis module (106) contains a statistics register block (403) in which signal quality statistics are calculated for each of the examined electric power meters (5).

9. A device according to any of claims 6 to 8, **characterised in that** the control module (107) contains a retention criterion selector block (502) in which a signal visualisation retention criterion is introduced.

10. A device according to any of claims 6 to 9, **characterised in that** the electric power meter (5) is a current and/or voltage transformer.

11. A device according to any of claims 6 to 10, **characterised in that** the electric power meter (5) is any device compatible with the protocol with which the examined sampled digital signal is transmitted.

12. A computer program for monitoring digital signals generated in power electric meters working in substation automation systems, which computer program is loadable in and executable on a data processing unit of a computer (7) and which computer program performs when being executed by the data processing unit of the computer, the method according to claims 1-4.

## Patentansprüche

1. Verfahren und Vorrichtung zur Überwachung von digitalen, in einer Verteilerautomatisierungseinrichtung arbeitenden elektrischen Messgeräten hoher Leistung erzeugten Signalen, die einen Computer sowie eine Prozessbusverbindung zur Übersendung der digitalen Signale anwenden, das folgende Tätigkeiten einschließt:
- empfängt im Kommunikationsport (10) die abgetasteten digitalen Signale, die mindestens durch ein elektrisches Messgerät (5) in Form von Netzwerkpaketen abgesendet wurden, und sendet sie weiter zum Analysemodul (101) der Netzwerkpakete und danach durch den Signaldecodermodul (103) zum Registrierungsmodul (104) der Visualisierungstabellen, wobei im Signaldecodermodul (103) die Daten der Netzwerkpakete in Strom- und Spannungsdaten umgewandelt werden, die mittels digitaler Signale übersendet werden und danach in Prozessdaten (X), in zur Statistik verwendbare Daten (Y) sowie Daten (Z), die für die Erzeugung einer Liste der aktiven elektrischen Messgeräte (5) verwendbar sind, aufgeteilt werden, die im Registrierungsmodul (104) der Visualisierungstabellen gespeichert werden,
- ein Zeichen für das Beibehalten des Visualisierungssignals, das vom Modul (106) zur Signalanalyse geliefert wird, sowie die Identifizierungsdaten des vorher im Steuerungsmodul (107) gewählten elektrischen Messgerätes (5) werden im Analysemodul (101) der Netzwerkpakete eingefangen,
- die durch das Analysemodul (101) der Netzwerkpakete eingefangenen Daten werden zum Modul (102) zur Erkennung der elektrischen Messgeräte gesendet, in welchem die Menge und die Identifizierungsdaten der aktiven elektrischen Messgeräte (5) in Echtzeit bestimmt werden, und danach zum Registrierungsmodul (104) der Visualisierungstabellen abgesendet,
- im Modul (106) zur Signalanalyse wird auf Grund der zur Statistikbildung verwendbaren Daten (Y) eine Statistik für die Signale der elektrischen Messgeräte (5) erstellt, die die Qualität des durch das gegebene Elektrische Messgerät (5) ausgesendeten Signals betrifft,
- die Daten vom Registrierungsmodul der Visualisierungstabellen (104), dem Modul zur Analyse des Signals (106), und dem Steuerungsmodul (107), werden zum Steuerungsmodul des Anzeigegeräts (105) gesendet, in welchem die Anzeige (9) automatisch generiert wird.

2. Verfahren nach Anspruch 1, **dadurch gekennzeichnet, dass** das Einfangen des abgetasteten digitalen Signals durch das Analysemodul (101) der Netzwerkpakete in einer solchen Abnahmeweise der Pakete besteht, die für keines der Messgeräte (5) sichtbar ist sowie ohne Einrichtung einer Verbindung stattfindet, die die Anwendung des Protokolls einschließt, mittels welchem das getestete abgetastete digitale Signal übertragen wird,

3. Verfahren nach Anspruch 1, **dadurch gekennzeichnet, dass** im Modul (106) zur Analyse des Signals das Zeichen für das Beibehalten des Visualisierungssignals auf Grund eines Kriteriums für das Beibehalten sowie der Prozessdaten (X) in Echtzeit errechnet wird, unter Zugabe eines logischen Wortes, der das Beibehalten einer Signalmomentaufnahme auf der Anzeige (9) oder eine Fortsetzung der Visualisierung bedeutet.

4. Verfahren nach Anspruch 1, **dadurch gekennzeichnet, dass** nur die Prozessdaten (X) von einem elektrischen Messgerät (5), das vorher im Steuerungsmodul (107) ausgewählt wurde, zum Registrierungsmodul (104) der Visualisierungstabellen gesendet werden.

5. Verfahren nach Anspruch 1-4, **dadurch gekennzeichnet, dass** das elektrische Messgerät (5) ein Stromwandler und/oder ein Spannungsumformer oder eine beliebige Einrichtung ist, die mit dem Protokoll kompatibel ist, mittels welchem das abgetastete digitale Signal gesendet wird.

6. Vorrichtung zur Durchführung des Verfahrens nach Anspruch 1-4, **dadurch gekennzeichnet, dass** sie enthält:
- einen mit dem Analysemodul (101) der Netzwerkpakete verbundenen Kommunikationsport (10), der zur Entnahme von Stichproben eines digitalen Signals in Form von Netzwerkpaketen dient,
- ein Analysemodul (101) der Netzwerkpakete, das einen Sperrfilter (203) und einen Puffer (205) enthält und der zur Speicherung der gefilterten Netzwerkpakete dient, die zum abgetasteten digitalem Signal gehören, sowie zur Überprüfung des Wertes des Zeichens für das Beibehalten des Visualisierungssignals dient,
- ein Modul (102) für die Erkennung der elektrischen Messgeräte, das zur Bestimmung der Menge der elektrischen Messgeräte (5) in Echtzeit sowie zur Ablesung der Identifikationsdaten dieser Messgeräte dient, deren Eingang mit dem Analysemodul der Netzwerkpakete (101) verbunden ist,
- ein Signaldecodermodul (103), das zur Umwandlung der mittels des Prozessbusses (6) übersendeten Datenpakete in Strom- und Spannungswerte mit Hilfe eines digitalen Signals dient sowie zu ihrer Aufteilung in Prozessdaten (X), in Daten (Y), die bei der Statistik verwendbar sind, und Daten (Z), die zur Aufstellung von Listen der aktiven elektrischen Messgeräte (5) dienen,
- ein Registrierungsmodul (104) der Visualisierungstabellen, das zur Aufbewahrung der Stichprobendaten in Form von Visualisierungstabellen dient, dessen Eingang mit dem Modul des Signaldecoders (103) und dem Modul (102) für die Erkennung der elektrischen Messgeräte verbunden ist,
- ein Modul (106) zur Signalanalyse, dessen Eingänge mit dem Registrierungsmodul (104) der Visualisierungstabellen und dem Steuerungsmodul (107) verbunden sind, das zur Berechnung des Zeichens für das Beibehalten des Visualisierungssignals sowie zur Berechnung der Signalstatistik betreffend die Signalqualität für jedes der elektrischen Messgeräte (5) dient,
- ein Steuerungsmodul (107), das zur Einführung des Kriteriums zum Beibehalten des Visualisierungssignals und zum Auswählen eines Messwertes für die Visualisierung dient, das mit dem Registrierungsmodul (104) der Visualisierungstabellen, dem Modul (106) zur Signalanalyse und dem Analysemodul der Netzwerkpakete (101) verbunden ist,
- ein Modul (105) zur Steuerung des Anzeigegeräts, das zu einer automatischen Generierung der Anzeige dient, das mit dem Registrierungsmodul der Visualisierungstabellen (104), dem Modul (106) zur Signalanalyse, dem Steuerungsmodul (107) und mit der Anzeige (9) verbunden ist.

7. Vorrichtung nach Anspruch 6, **dadurch gekennzeichnet, dass** das Analysemodul der Netzwerkpakete (101) mittels eines Kommunikationsportes (10) an eine Prozessbusverbindung (6) angeschlossen ist und es die Netzwerkpate ohne Verbindung mit dem elektrischen Messgerät (5) unter Verwendung des Protokolls, mittels welchem das getestete abgetastete Signal gesendet wird, einfängt.

8. Vorrichtung nach Anspruch 6 oder 7, **dadurch gekennzeichnet, dass** das Modul (106) zur Signalanalyse einen Statistikregistrierblock (403) enthält, in dem Qualitätsstatistiken für jedes der geprüften elektrischen Messgeräte (5) errechnet werden.

9. Vorrichtung nach jedem beliebigen Anspruch von 6 bis 8, **dadurch gekennzeichnet, dass** das Steuerungsmodul (107) einen Selektierblock für Retentionskriterien (502) enthält, in dem Kriterien zur Beibehaltung der Signalvisualisierung eingeführt werden.

10. Vorrichtung nach jedem beliebigen Anspruch von 6 bis 9, **dadurch gekennzeichnet, dass** das elektrische Messgerät (5) ein Stromwandler und/oder ein Spannungsumformer ist.

11. Vorrichtung nach jedem beliebigen Anspruch von 6 bis 10, **dadurch gekennzeichnet, dass** das elektrische Messgerät (5) ein beliebiges Gerät ist, das mit dem Protokoll, mittels welchem das getestete abgetastete digitale Signal gesendet wird, kompatibel ist.

12. Computerprogramm zur Überwachung der in elektrischen Messgeräten generierten digitalen Signale, die in Verteilerautomatisierungseinrichtungen arbeiten, und das in Datenverarbeitungs-Einheiten eines Computers (7) geladen und ausgeführt werden kann und das, durch die DatenverarbeitungsEinheit eines Computers ausgeführt, das Verfahren nach Anspruch 1-4 durchführt.

## Revendications

1. Procédé et dispositif de surveillance des signaux numériques fournis par les appareils électriques de mesure de puissance dans le système d'automatisation de sous-station, lesquels utilisent le dispositif d'ordinateur et le bus de communication de process à la transmission des signaux numériques, comprend les actions suivantes :
- les signaux numériques échantillonnés, envoyés par au moins un appareil électrique de mesure (5) sous forme de paquets de réseau, sont reçus dans le port de communication (10) et ils sont, par la suite, envoyés au module d'analyse des paquets de réseau (101) pour être ensuite envoyés au module de registre des tableaux de visualisation (104) au travers du module de décodeur du signal (103), étant entendu que dans le module du décodeur du signal (103), les données des paquets de réseau sont transformées en valeurs des courants et des tentions transmises par le signal numérique et divisées en données de process (X), données utiles à la production de la statistique (Y) et données (Z) utiles pour générer une liste des appareils électriques actifs de mesure (5) qui sont sauvegardées dans le module de registre des tableaux de visualisation (104),
- l'indicateur de rétention de visualisation du signal, qui est fourni à partir du module d'analyse du signal (106), ainsi que les données identifiant de l'appareil électrique de mesure (5) choisi préalablement dans le module de commande (107) sont capturés dans le module d'analyse des paquets de réseau (101),
- les données capturées par le module d'analyse des paquets de réseau (101) sont transmises au module de détection des appareils électriques de mesure (102) dans lequel la quantité et les données identifiant des appareils électriques actifs de mesure (5) sont déterminées en temps réel et transmises ensuite au module de registre des tableaux de visualisation (104),
- dans le module d'analyse du signal (106), la statistique du signal des appareils électriques de mesure (5) relative à la qualité du signal émis par l'appareil électrique de mesure concerné (5) est calculée sur la base des données (Y) utiles à créer la statistique,
- les données du module de registre des tableaux de visualisation (104), du module d'analyse du signal (106) et du module de commande (107) sont envoyées au module de contrôle d'affichage (105) où le contenu de l'écran (9) est automatiquement formé.

2. Le procédé selon la revendication 1, **caractérisé en ce que** la capture du signal numérique échantillonné par le module d'analyse des paquets de réseau (101) consiste à la réception des paquets de données de réseau de manière invisible pour aucun des appareils de mesure (5), sans établir la connexion qui entraîne l'utilisation du protocole au travers duquel le signal numérique échantillonné est transmis.

3. Le procédé selon la revendication 1, **caractérisé en ce que** l'indicateur de rétention de visualisation du signal est calculé en temps réel dans le module d'analyse du signal (106) sur la base du critère de rétention et de données de process (X) en lui attribuant une valeur logique qui dénote la rétention de ce que l'on appelle le signal instantané sur l'affichage (9) ou dénotant la continuation de la visualisation.

4. Le procédé selon la revendication 1, **caractérisé en ce qu'**il n'y a que les données de process (X) correspondant à l'appareil électrique de mesure (5) préalablement choisi dans le module de commande (107) qui sont transmises au registre des tableaux de visualisation (104).

5. Le procédé selon les revendications 1 à 4, **caractérisé en ce que** l'appareil électrique de mesure (5) est un transformateur de courant et/ou de tension, ou bien tout un autre dispositif compatible au protocole au travers duquel le signal échantillonné examiné est transmis.

6. Le dispositif à réaliser le procédé selon les revendications 1 à 4, **caractérisé en ce qu'**il comprend :
- le port de communication (10), connecté au module d'analyse des paquets de réseau (101), qui sert à prélever les échantillons du signal numérique sous forme de paquets de réseau,
- le module d'analyse des paquets de réseau (101) comprenant un bloc de filtre (203) et un tampon (205), qui sert à sauvegarder les paquets de réseau filtrés appartenant au signal numérique échantillonné et à vérifier la valeur de l'indicateur de rétention de visualisation du signal,
- le module de détection des appareils électriques de mesure (102) qui sert à déterminer, en temps réel, le nombre d'appareils électriques actifs de mesure (5) ainsi qu'à la lecture des donnés d'identification de ces appareils de mesure, dont l'entrée est connectée au module d'analyse des paquets de réseau (101),
- le module de décodeur du signal (103) qui sert à transformer les données des paquets transmises par le bus de communication de process (6) en valeurs des courants et des tensions transmises via le signal numérique et à faire, dans ces données, une distinction entre les données de process (X), les données utiles à créer une statistique (Y) et celles (Z) qui sont utiles à générer une liste des appareils électriques actifs de mesure (5),
- le module de registre des tableaux de visualisation (104) qui sert à conserver les échantillons des données sous forme de tableaux de visualisation, dont l'entrée est connectée au module de décodeur du signal (103) et au module de détection des appareils électriques de mesure (102),
- le module d'analyseur du signal (106), dont les entrées sont connectées au module de registre des tableaux de visualisation (104) et au module de commande (107), qui sert à déterminer l'indicateur de rétention de visualisation du signal ainsi qu'à calculer la statistique du signal relative à la qualité de ce signal pour chacun des appareils électriques de mesure (5),
- le module de commande (107), servant à introduire le critère de rétention de la visualisation du signal et de choix de l'appareil de mesure pour la visualisation, qui est connecté au module de registre des tableaux de visualisation (104), au module d'analyse du signal (106) et au module d'analyse des paquets de réseau (101),
- le module de contrôle de l'affichage (105), servant à la formation automatique du contenu de l'écran, qui est connecté au module de registre des tableaux de visualisation (104), au module d'analyseur du signal (106), au module de commande (107) et à l'afficheur (9).

7. Le dispositif selon la revendication 6, **caractérisé en ce que** le module d'analyse des paquets de réseau (101) est connecté au bus de communication de process (6) au travers du port de communication (10) et il capture les paquets de réseau sans établir la connexion avec l'appareil électrique de mesure (5) entraînant l'utilisation du protocole au travers duquel le signal numérique échantillonné est transmis.

8. Le dispositif selon la revendication 6 ou 7, **caractérisé en ce que** le module d'analyse du signal (106) comprend un bloc de registre des statistiques (403) où est calculée la statistique de la qualité du signal pour chacun des appareils électriques de mesure examinés (5).

9. Le dispositif selon l'une des revendications de 6 à 8, **caractérisé en ce que** le module de commande (107) comprend un bloc de sélecteur du critère de rétention (502) où est introduit le critère de rétention de la visualisation du signal.

10. Le dispositif selon l'une des revendications de 6 à 9, **caractérisé en ce que** l'appareil électrique de mesure (5) est un transformateur de courant et/ou de tension.

11. Le dispositif selon l'une des revendications de 6 à 10, **caractérisé en ce que** l'appareil électrique de mesure (5) est un dispositif quelconque compatible au protocole au travers duquel le signal échantillonné examiné est transmis.

12. Un programme d'ordinateur pour la surveillance des signaux numériques générés dans les appareils électriques de mesure fonctionnant dans le système d'automatisation de sous-station, qui est chargeable à et exécuté dans l'unité de transformation des données de l'ordinateur (7) et lequel programme d'ordinateur, étant exécuté par l'unité de transformation des données dans l'ordinateur, réalise le procédé selon les revendications 1 à 4.
